# EUROPEAN PATENT APPLICATION

(11) **EP 1 574 547 A1**
(43) Date of publication of application: **14.09.2005**
(21) Application number: 05004798.4
(22) Date of filing: 04.03.2005
(51) Int. Cl.: C08K 5/3492, C08G 69/36, C08L 77/00, C08L 77/06

(54) **Flame-retardant polyamide resin composition and extrusion-molded product**

(30) Priority: 09.03.2004 JP 2004065370; 22.09.2004 JP 2004274286
(71) Applicant: MITSUBISHI ENGINEERING-PLASTICS CORPORATION, Tokyo (JP)
(72) Inventor: Ohyama, Hajime, Hiratsuka-shi Kanagawa-ken (JP); Tsunoda, Morio, Hiratsuka-shi Kanagawa-ken (JP); Watanabe, Ken, Hiratsuka-shi Kanagawa-ken (JP)
(74) Representative: HOFFMANN EITLE

(57) **Abstract**

The present invention relates to a polyamide resin composition comprising 99 to 80 parts by weight of a polyamide base resin comprising at least one polyamide resin and 1 to 20 parts by weight of a triazine-based flame retardant, the total amount of polyamide base resin and triazine-based flame retardant being 100 parts by weight,
said polyamide base resin having constituting units comprising (a) polyamide 6 constituting units comprising a polycondensate of ε-caprolactam and (b) two or more kinds of polyamide constituting units comprising a polycondensate of hexamethylenediamine and a dicarboxylic acid having a carbon number of 6 to 11.

## Description

### BACKGROUND OF THE INVENTION

The present invention relates to flame-retardant polyamide resin compositions which are excellent in flexibility, mechanical strength, heat resistance, etc., as well as extrusion-molded products using such resin compositions. More particularly, it relates to flame-retardant polyamide resin compositions which exhibit a good flame retardancy without using a halogen-based flame retardants, and are excellent in flexibility, mechanical strength, heat resistance, heat-aging resistance, etc., and suitable as a material for extrusion-molded products such as tubes and sheets, as well as molded products using the resin compositions.

Conventionally, extrusion-molded products such as typically tubes, sheets and films have been produced from polyolefins such as PP. In order to improve safety for buildings such as houses, warehouses, tents and power plants, and automobiles, it has been recently required to impart a flame retardancy to the extrusion-molded products. As materials of flame-retardant extrusion-molded products, vinyl chloride resins have been widely used because of excellent flame retardancy and flexibility thereof. In recent years, there is such a social demand that the use of halogen-based compounds having chlorine or bromine which tend to cause environmental pollution or damage a human health should be avoided. Therefore, it has been demanded to produce flame-retardant extrusion-molded products from resins other than vinyl chloride-based resins.

On the other hand, since polyolefins themselves have a poor flame retardancy, it may be difficult to impart a good flame retardancy to the polyolefins without incorporating chlorine or bromine thereinto. Besides, even though a good flame retardancy can be imparted to the polyolefins using non-halogen compounds, a very large amount of the non-halogen flame retardants must be blended therein, resulting in remarkable deterioration in mechanical strength thereof. If the non-halogen flame retardants contain metals or the like, there tend to occur problems such as generation of corrosive gases or harmful gases, poor workability and safety due to residual ashes produced upon incineration thereof, and difficult maintenance of facilities used for incineration thereof.

Polyamide resins have also been applied to extrusion-molded products because the polyamide resins are excellent in mechanical strength, heat resistance, chemical resistance or the like. As the method of imparting a good flame retardancy to the polyamide resins without using halogen-based compounds, there is known, for example, the method using triazine-based compounds such as melamine cyanurate as described in Japanese Patent Application Laid-open (KOKAI) No. 53-31759. However, the compositions prepared by blending the triazine-based compounds in polyamide 6 as described in Japanese Patent Application Laid-open (KOKAI) No. 53-31759 tend to be insufficient in flexibility.

As the method of improving a flexibility of the polyamide resins, in Japanese Patent Application Laid-open (KOKAI) No. 5-255589, there has been proposed the method of adding a polyolefin-based elastomer thereto. However, the resultant resin compositions tend to be deteriorated in flame retardancy. Therefore, it has been conventionally difficult to produce polyamide resin compositions and flame-retardant extrusion-molded products made of polyamide resins which are excellent in both flexibility and flame retardancy.

Further, as another method of improving a flexibility of the polyamide resins, in Japanese Patent Application Laid-open (KOKAI) No. 2002-309082, there has been proposed the method of adding a specific plasticizer thereto. The plasticizer used in Japanese Patent Application Laid-open (KOKAI) No. 2002-309082 hardly causes deterioration in flame retardancy of the resins as compared to the other conventional plasticizers, and allows the resins to exhibit a good heat resistance. However, when the resins are used under still higher temperature conditions, the plasticizer tends to be transpired and, therefore, no longer exhibit a function as the plasticizer, resulting in inevitable deterioration in flexibility and tenacity as well as poor appearance.

Namely, there have been presently obtained neither polyamide resin compositions that are excellent in flame retardancy, flexibility, environmental suitability and heat resistance, nor extrusion-molded products produced from the polyamide resin compositions.

### SUMMARY OF THE INVENTION

An object of the present invention is to provide a polyamide resin composition that is excellent in flame retardancy, flexibility, combustibility, environmental suitability, mechanical strength and heat resistance, as well as an extrusion-molded product such as tubes, sheets and films which are produced by extrusion-molding the polyamide resin composition into a desired shape.

As a result of present inventors' earnest study to attain the above object, it has been found that the composition prepared by blending a triazine-based flame retardant in a polyamide resin having specific constituting units can exhibit good flame retardancy and flexibility without damage to properties inherent to the polyamide resin. The present invention has been attained on the basis of the above finding.

In a first aspect of the present invention, there is provided a polyamide resin composition comprising 99 to 80 parts by weight of a polyamide base resin comprising at least one polyamide resin and 1 to 20 parts by weight of a triazine-based flame retardant, the total amount of polyamide base resin and triazine-based flame retardant being 100 parts by weight,
said polyamide base resin having constituting units comprising (a) polyamide 6 constituting units comprising a polycondensate of ε-caprolactam and (b) two or more kinds of polyamide constituting units comprising a polycondensate of hexamethylenediamine and a dicarboxylic acid having a carbon number of 6 to 11.

In a second aspect of the present invention, there is provided a molded product produced by extrusion-molding said polyamide resin composition as described in the first aspect.

### DETAILED DESCRIPTION OF THE INVENTION

The present invention is described in detail below.

The polyamide resin used in the present invention has (a) polyamide 6 constituting units comprising a polycondensate of ε-caprolactam, and (b) two or more kinds of polyamide constituting units comprising a polycondensate of hexamethylenediamine and a dicarboxylic acid having a carbon number of 6 to 11. Meanwhile, in the present invention, the carbon number of the dicarboxylic acid means the number of carbon atoms contained in the dicarboxylic acid which include those having the carboxyl groups thereof. In the present invention, by using the polyamide resin having such constituting units, it becomes possible to improve not only a flexibility but also a flame retardancy and heat resistance of the resin even without using elastomers or specific plasticizers.

Specific examples of the dicarboxylic acid having a carbon number of 6 to 11 used as a raw material of the constituting units of the polyamide resin according to the present invention may include adipic acid, pimelic acid, suberic acid, azelaic acid, sebacic acid, 2,4-diethylglutaric acid and undecanedioic acid. When the carbon number of the dicarboxylic acid is more than 12, the resultant polyamide resin tends to be deteriorated in flame retardancy. On the other hand, when the carbon number of the dicarboxylic acid is less than 6, the resultant polyamide resin may fail to be sufficiently improved in a flexibility thereof.

The polyamide constituting units (b) comprising a polycondensate of hexamethylenediamine and the dicarboxylic acid having a carbon number of 6 to 11 are preferably the combination of polyamide constituting units comprising a polycondensate of hexamethylenediamine and adipic acid (polyamide 66 constituting units), and polyamide constituting units comprising a polycondensate of hexamethylenediamine and the dicarboxylic acid having a carbon number of 7 to 11, since the former polyamide 66 constituting units have been extensively available in the market and, therefore, are inexpensive. Further, the dicarboxylic acid having a carbon number of 7 to 11 is more preferably such a dicarboxylic acid having carbon atoms in odd numbers. This is because the use of the dicarboxylic acid having carbon atoms in odd numbers is effective for the purpose of improving a flexibility of the resultant polyamide resin. Among these dicarboxylic acids having a carbon number of 7 to 11, preferred are those dicarboxylic acids having a less number of carbon atoms. The reason therefor is that the use of the dicarboxylic acid having a less number of carbon atoms is effective for the purpose of improving a flame retardancy of the resultant polyamide resin. For these reasons, the dicarboxylic acid having a carbon number of 7 to 11 which is used in combination with the polyamide 66 constituting units is more preferably azelaic acid from the standpoint of well-balanced flame retardancy and flexibility of the resultant polyamide resin.

The polyamide resin used in the present invention preferably has the polyamide 6 constituting units (a) in a larger amount than the other polyamide constituting units, more preferably in an amount of not less than 50% by weight. Still more preferably, there is used such a polyamide resin which has 75 to 94% by weight of polyamide 6 constituting units, 3 to 9% by weight of polyamide 66 constituting units comprising a polycondensate of hexamethylenediamine and adipic acid, and 3 to 20% by weight of polyamide constituting units comprising a polycondensate of hexamethylenediamine and the dicarboxylic acid having a carbon number of 7 to 11.

The ends of the polyamide resin having such specific constituting units according to the present invention may be sealed with carboxylic acids or amines. Among them, preferred are polyamide resins whose ends are sealed with C₆ to C₂₂ carboxylic acids or amines. Specific examples of the carboxylic acids used for sealing the ends of the polyamide resin may include aliphatic monocarboxylic acids such as caproic acid, caprylic acid, capric acid, lauric acid, myristic acid, palmitic acid, stearic acid and behenic acid. Specific examples of the amines used for the above purpose may include aliphatic primary amines such as hexyl amine, octyl amine, decyl amine, lauryl amine, myristyl amine, palmityl amine, stearyl amine and behenyl amine. The amount of the carboxylic acid or amine used for sealing the ends of the polyamide resin is preferably about 30 µeq/g.

In addition, the polyamide resin preferably used in the present invention has a specific polymerization degree, i.e., an appropriate viscosity. The viscosity number of the polyamide resin as measured according to ISO 307 (JIS K6933) is preferably in the range of 86 to 341. When the viscosity number of the polyamide resin is less than 86, the polyamide resin tends to be deteriorated in moldability due to a too low melt viscosity thereof, and mechanical strength. When the viscosity number of the polyamide resin is more than 341, the polyamide resin tends to be deteriorated in fluidity.
The viscosity number of the polyamide may be appropriately determined according to the application thereof from the standpoint of moldability thereof. For example, when the polyamide resin is applied to box-shaped molded products, the viscosity number thereof is preferably as large as about 163 to 310, whereas when the polyamide resin is applied to tubular molded products, the viscosity number thereof is preferably as low as about 137 to 246.

The method for producing the polyamide resin used in the present invention is not particularly restricted. For example, there may be used the method of copolymerizing ε-caprolactam, hexamethylenediamine and two or more kinds of dicarboxylic acids having a carbon number of 6 to 11 with each other by ordinary method (production method 1). However, in this method, depression of a melting point of the resultant product tends to be usually caused. Therefore, upon production of a copolyamide having a melting point of not less than 190°C, two or more polyamides having necessary constituting units are preferably melt-mixed or dry-blended with each other so as to attain the aimed composition.

As the melt-mixing or dry-blending method, there may be used the method of melt-mixing or dry-blending polyamide 6 obtained by polycondensing ε-caprolactam, with polyamide obtained by polycondensing hexamethylenediamine and two or more kinds of dicarboxylic acids having a carbon number of 6 to 11 (production method 2); the method of melt-mixing or dry-blending polyamide 6 obtained by polycondensing ε-caprolactam, with two or more kinds of polyamides respectively produced from hexamethylenediamine and a dicarboxylic acid having a carbon number of 6 to 11 (production method 3); or the method of melt-mixing or dry-blending a copolyamide obtained by polycondensing ε-caprolactam, hexamethylenediamine and at least one dicarboxylic acid having a carbon number of 6 to 11, with a polyamide obtained by polycondensing hexamethylenediamine and the other dicarboxylic acid (production method 4).

These production methods (1) to (4) are explained concerning exemplary cases where the dicarboxylic acid having a carbon number of 6 to 11 is adipic acid (carbon number: 6) and azelaic acid (carbon number: 9).

Production method 1: ε-Caprolactam, hexamethylenediamine, adipic acid and azelaic acid are copolymerized (polyamide 6/66/69).

Production method 2: A polyamide obtained by polycondensing ε-caprolactam (polyamide 6) is blended with a polyamide obtained by polycondensing hexamethylenediamine, adipic acid and azelaic acid (polyamide 66/69).

Production method 3: A polyamide obtained by polycondensing ε-caprolactam (polyamide 6) is blended with a polyamide obtained by polycondensing hexamethylenediamine and adipic acid (polyamide 66) and a polyamide obtained by polycondensing hexamethylenediamine and azelaic acid (polyamide 69).

Production method 4: A polyamide obtained by polycondensing ε-caprolactam (polyamide 6) is blended with a copolyamide obtained by polycondensing ε-caprolactam, hexamethylenediamine and adipic acid (polyamide 6/66) and a polyamide obtained by polycondensing hexamethylenediamine and azelaic acid (polyamide 69), or in the above blending procedure, a copolyamide obtained by polycondensing ε-caprolactam, hexamethylenediamine and azelaic acid (polyamide 6/69) is used instead of the polyamide 69.

In the method (1), (2) and (3), although it is possible to produce polyamides having desired properties, there tend to sometimes occur problems such as narrow range of selectable conditions, high costs required for production facilities and production conditions, etc. In particular, for example, in the case of the polyamide 66 having a high melting point, it may be sometimes difficult to compound the other polyamides such as polyamide 6 therewith by ordinary methods. For this reason, the production method 4 using polyamide 6/66 whose melting point is not as high as that of polyamide 66 is preferred.

### Triazine-based flame retardant:

Examples of the triazine-based flame retardant used in the present invention may include melamines, melamine cyanurates and compounds represented by the following general formula (1) or (2): 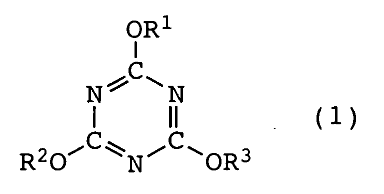 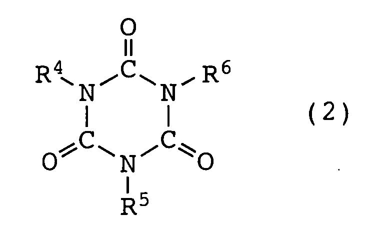 wherein R¹ to R⁶ are respectively a hydrogen atom or an alkyl group having 1 to 10 carbon atoms.

Specific examples of the compounds represented by the above general formula (1) may include cyanuric acid, trimethyl cyanurate, triethyl cyanurate, tri(n-propyl) cyanurate, methyl cyanurate and diethyl cyanurate.

Specific examples of the compounds represented by the above general formula (2) may include isocyanuric acid, trimethyl isocyanurate, triethyl isocyanurate, tri(n-propyl) isocyanurate, diethyl isocyanurate and methyl isocyanurate.

Examples of the melamines may include melamine, melamine derivatives, compounds having a chemical structure similar to that of melamine, and melamine condensates. Specific examples of the melamines may include melamine, ammeride, ammerine, formoguanamine, guanyl melamine, cyanomelamine, aryl guanamine, melam, melem, and mellon.

As the melamine cyanurates, there may be exemplified an equimolar reaction product of cyanuric acid and melamine. Some of amino groups or hydroxyl groups contained in the melamine cyanurates may be substituted with other substituent groups. The melamine cyanurates may be produced, for example, by mixing an aqueous cyanuric acid solution and an aqueous melamine solution together to react with each other at a temperature of 90 to 100°C under stirring, and filtering the obtained precipitate. The thus obtained white solid is preferably pulverized into fine particles upon use. Also, commercially available products may be used directly or after pulverized.

Examples of the preferred triazine-based flame retardant may include cyanuric acid, isocyanuric acid, melamine and melamine cyanurates. Of these triazine-based flame retardants, more preferred are melamine cyanurates since these compounds are free from inconveniences such as occurrence of blooming which is such a phenomenon that decomposed products are raised on the surface of a molded product.

The amount of the triazine-based flame retardant contained in the composition of the present invention is adjusted such that contents of the polyamide resin and the triazine-based flame retardant are 99 to 80 parts by weight and 1 to 20 parts by weight, respectively, based on 100 parts by weight of a total amount of the polyamide resin and the triazine-based flame retardant. When the content of the triazine-based flame retardant is less than 1 part by weight, the resultant composition tends to be deteriorated in flame retardancy. When the content of the triazine-based flame retardant is more than 20 parts by weight, the resultant composition tends to be deteriorated in tenacity. The content of the triazine-based flame retardant is preferably in the range of 2 to 10 parts by weight from the standpoint of a good balance between flame retardancy, tenacity and moldability.

The polyamide resin composition of the present invention contains the polyamide resin and the triazine-based flame retardant as essential components. In addition, the polyamide resin composition of the present invention may also contain various other additives unless the addition thereof adversely affects the aimed objects and effects of the present invention.

In particular, in order to improve a heat resistance of the composition, any stabilizer may be added thereto. As the stabilizer, there may be used at least one compound selected from the group consisting of hindered phenol-based compounds, phosphorus-based compounds, sulfur-based compounds and chlorine- and bromine-free copper compounds.

The hindered phenol-based compounds used in the present invention are compounds generally used as an antioxidant and a processing stabilizer which have a 2,6- or 2,4-alkyl-substituted phenol structure in a molecule thereof. The hydroxyl groups of the hindered phenol-based compounds may be esterified with acids such as phosphorous acid. Further, one or more alkyl-substituted phenol structures may exist in a molecule of the hindered phenol-based compounds.

Specific examples of the hindered phenol-based compounds may include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], pentaerythrityl-tetrakis[3-(3,5-di-t-butyl-4-hydroxyphenyl)propionate], N,N'-hexamethylenebis(3,5-di-t-butyl-4-hydroxy-hydrocinnamamide), 3,5-di-t-butyl-4-hydroxybenzylphosphonate-diethyl ester, octadecyl-3-(3,5-dit-butyl-4-hydroxyphenyl)propionate, 1,3,5-trimethyl-2,4,6-tris(3,5-di-t-butyl-4-hydroxybenzyl)benzene, 2,4-bis-(n-octylthio)-6-(4-hydroxy-3,5-di-t-butylanilino)-1,3,5-triazine and 2,2-thio-diethylenebis[3-(3,5-di-t-butyl-4-hydroxyphenyl)propionate]. These hindered phenol-based compounds may be used singly or in the combination of any two or more thereof.

The hindered phenol-based stabilizer used in the present invention is preferably N,N'-alkylene-bis-(3,5-dialkyl-4-hydroxy-hydrocinnamamide) represented by the following formula from the standpoints of a good compatibility with polyamides as well as less deterioration in properties and less molding troubles such as generation of gases even when blended at a high concentration: 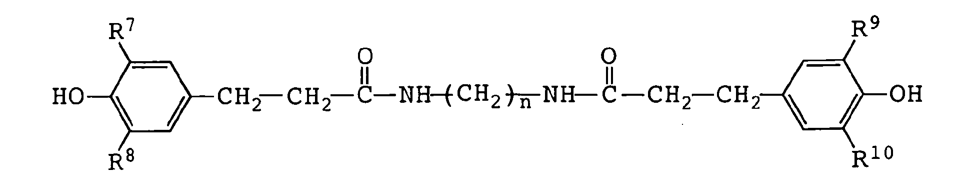 wherein n is an integer of 1 to 10; R⁷, R⁸, R⁹ and R¹⁰ are independently a hydrogen atom or a C₁ to C₈ alkyl.

Specific examples of the hindered phenol may include commercially available products which are marketed under the tradename "IRGANOX 1098" from Ciba Specialty Chemicals, Inc.

Examples of the phosphorus-based stabilizer used in the present invention may include bis(2,6-di-t-butyl-4-methylphenyl)pentaerythritol-diphosphite, bis(2,4-di-t-butylphenyl)pentaerythritol-diphosphite, tris(2,4-di-t-butylphenyl)phosphite and tetrakis(2,4-di-t-butylphenyl)-4,4'-biphenylene diphosphonite. These phosphorus-based stabilizers may be used singly or in the combination of any two or more thereof. Of these phosphorus-based stabilizers, tetrakis(2,4-di-t-butylphenyl)-4,4'-biphenylene diphosphonite is preferred from the standpoint of a less generation of gases upon molding.

Examples of the sulfur-based stabilizer used in the present invention may include tetrakis[methylene-3-(dodecylthio)propionate]methane, bis[2-methyl-4-{3-n-alkyl(C₁₂ or C₁₄)thiopropionyloxy}-5-t-butylphenyl]sulfide, di-tridecyl-thio-dipropionate, distearyl-thio-dipropionate and dilauryl-thio-dipropionate. These sulfur-based stabilizers may be used singly or in the combination of any two or more thereof. These sulfur-based stabilizers are highly effective to prevent discoloration of the polyamide.

The above hindered phenol-based compounds, phosphorus-based stabilizers and sulfur-based stabilizers may be added singly or in the combination of plural kinds thereof. The amount of the stabilizer blended is preferably in the range of 0.01 to 5 parts by weight, more preferably 0.05 to 3 parts by weight based on 100 parts by weight of a total amount of the polyamide resin and the triazine-based flame retardant. When the amount of the stabilizer blended is less than 0.01 part by weight, the addition of the stabilizer may fail to exhibit a sufficient effect of improving the heat-aging resistance, etc. On the other hand, even when the amount of the stabilizer blended is more than 5 parts by weight, the heat-resisting effect by the addition thereof can be no longer increased, and rather the resultant molded products tend to suffer from surface defects such as blooming on the surface thereof, etc. In particular, in order to prevent deterioration in tensile elongation of the molded products due to heat-aging, the combination of the hindered phenol-based compound and the phosphorus-based stabilizer or the combination of the copper compound and alkali halide is preferably used. When the hindered phenol-based compound is used in combination with the phosphorus-based stabilizer, the hindered phenol-based compound and the phosphorus-based stabilizer are respectively blended in an amount of preferably 0.01 to 1 part by weight, more preferably 0.05 to 0.8 part by weight based on 100 parts by weight of a total amount of the polyamide resin and the triazine-based flame retardant. A total amount of the hindered phenol-based compound and the phosphorus-based stabilizer is preferably 0.02 to 1.5 parts by weight, more preferably 0.05 to 1.2 parts by weight.

The chlorine- and bromine-free copper compound usable in the present invention is not particularly restricted as long as the compound can be uniformly blended in the polyamide resin. Examples of the chlorine- and bromine-free copper compound may include inorganic copper salts such as copper iodide, organic acid copper salts such as copper formate, copper acetate, copper propionate, copper stearate, copper oxalate, copper sebacate, copper lactate, copper benzoate and copper salicylate, inorganic acid copper salts such as copper sulfate, copper nitrate, copper phosphate and copper phosphite, and copper chelate compounds. These copper compounds may be used singly or in the combination of any two or more thereof. Of these copper compounds, preferred is copper iodide because of its high effect of improving a heat-aging resistance of the polyamide.

The amount of the copper compound blended is 0.001 to 1 part by weight, preferably 0.005 to 0.5 part by weight based on 100 parts by weight of a total amount of the polyamide resin and the triazine-based flame retardant. When the amount of the copper compound blended is less than 0.001 part by weight, the heat-resisting effect thereof tends to be insufficient. On the other hand, even when the amount of the copper compound blended is more than 1 part by weight, the heat resistance of the resultant polyamide resin composition tends to be no longer improved.

The copper compound is preferably used in combination with a chlorine- and bromine-free alkali halide. Examples of the chlorine- and bromine-free alkali halide may include iodium compounds and fluorine compounds of ammonia, metal elements belonging to Groups Ia or IIa of the Periodic Table, and amphoteric metal elements belonging to Groups IIb, IIIa, IVa, Va or VIa of the Periodic Table. Specific examples of the alkali halide may include iodides and fluorides of ammonia, potassium, calcium, strontium, cesium, sodium, barium, beryllium, magnesium, lithium, rubidium, zinc, aluminum, gallium, indium, thallium, germanium, antimony, bismuth, polonium and lead. Of these alkali halides, preferred is potassium iodide because this compound exhibits a high effect of improving a heat resistance of the polyamide owing to the synergistic effect obtained when used in combination with the copper compound. These alkali halides may be used singly or in the combination of any two or more thereof.

The amount of the alkali halide blended is 0.01 to 5 parts by weight, preferably 0.05 to 3 parts by weight based on 100 parts by weight of a total amount of the polyamide resin and the triazine-based flame retardant. When the amount of the alkali halide blended is less than 0.01 part by weight, the heat resistance-improving effect owing to the synergistic effect with the copper compound tends to be insufficient. On the other hand, even when the amount of the alkali halide blended is more than 5 parts by weight, the heat resistance of the resultant polyamide resin composition tends to be no longer improved.

The copper compound and the alkali halide may be used in combination with the hindered phenol-based or phosphorus-based stabilizers.

Further, the polyamide resin composition of the present invention may also contain, in addition to the above components, various conventional additives such as pigments, dyes, plasticizers, fillers, nucleating agents, mold release agents, stabilizers, antistatic agents and other known additives unless the addition thereof adversely affect the aimed properties thereof. These additives may be blended and kneaded in the polyamide resin composition, and molded to form desired products. Meanwhile, when the plasticizer is blended in the polyamide resin composition, there are preferably used the specific plasticizers as described in Japanese Patent Application Laid-Open (KOKAI) No. 2002-309082. However, since such plasticizers inevitably cause deterioration in heat resistance and flame retardancy nevertheless only to a slight extent as compared to ordinary plasticizers, it is preferable to use substantially no plasticizer in the polyamide resin composition. Further, the polyamide resin composition of the present invention may also contain thermoplastic resins other than polyamide resins unless the addition thereof adversely affect the aimed effects of the present invention.

### Polyamide resin composition:

The polyamide resin composition of the present invention is suitably used as extrusion-molded products because of high flexibility and high flame retardancy thereof. In particular, the molded product obtained from the composition preferably exhibits a low tensile modulus, i.e., a tensile modulus of not more than 600 MPa as the value obtained by measuring a tensile modulus of a test specimen (test specimen according to JIS K7162) which is allowed to stand at 23°C and 65% RH for not less than 48 hours at an elastic stress rate of 5 mm/min according to JIS K7161 (ISO 5271). In addition, the polyamide resin composition preferably has such a flame retardancy that an oxygen index thereof in an absolute dry condition is not less than 23 as measured according to ISO 4589 (JIS K7201). Upon the extrusion molding, in order to suppress decomposition of the flame retardant, the resin temperature is suitably adjusted to not more than 300°C, preferably not more than 280°C, more preferably not more than 260°C. The polyamide resin composition of the present invention more preferably has a melting point of 190 to 260°C from the standpoints of flame retardancy, mechanical strength, moldability, decomposition of the flame retardant, heat resistance of the obtained molded products, etc. When the melting point of the polyamide resin composition is less than 190°C, the molded products obtained therefrom tend to be deteriorated in heat resistance. When the melting point of the polyamide resin composition is more than 260°C, the flame retardant tends to be decomposed upon extrusion-molding.

The polyamide resin composition may be produced by mixing the polyamide resin, the flame retardant and various additives with each other at the same time and then pelletizing the resultant mixture using an extruder. Alternatively, a part of the polyamide resin may be first mixed with the flame retardant and various additives such that concentrations of the flame retardant and additives are higher than those to be used in the final composition to thereby prepare pellets (master batch pellets), and then the thus obtained master batch pellets may be mixed with a remainder of the polyamide resin to produce the aimed polyamide resin composition.

The polyamide resin composition of the present invention may be molded into various products using conventionally known molding methods for polyamide resins. In particular, the polyamide resin composition is suitable for production of extrusion-molded products because of its good flexibility, etc. Among them, the polyamide resin composition is especially suitable for producing tubular or box-like molded products by modifying a shape of a die used therefor. The polyamide resin composition of the present invention may be drawn into a tube, and then compressed in a metal mold to form a bellow-like tube such as corrugated tubes, or cut into a spiral shape to form a spiral tube.

The thus formed tube has such a flame retardancy that an oxygen index thereof in an absolute dry condition is not less than 23. The material having an oxygen index of not less than 22 is impossible to continuously burn in air and, therefore, regarded as a self-extinguishing material.

The polyamide resin tubes do not necessarily require a high heat resistance in some applications. However, in the case where the tubes are used in the applications requiring a heat resistance, e.g., when used in engine room of automobiles, the polyamide resin composition for the tubes preferably has a melting point of not less than 190°C. When the melting point of the polyamide resin composition is less than 190°C, the tubes obtained therefrom tend to suffer from cracks due to heat transfer, poor surface properties due to surface fusion, or deteriorated performance at their portions where the tubes are constrained by binding bands or metallic fixtures for fixing the tubes, upon practical used thereof.

According to the present invention, it is possible to obtain a polyamide resin composition having an excellent flexibility and a melting point of not less than 190°C. Further, the polyamide resin composition can be readily extrusion-molded into a tube having an oxygen index of not less than 23.

Thus, the polyamide resin composition of the present invention has a high flame retardancy, i.e., an oxygen index of not less than 23 without using halogen-based flame retardants, and is excellent in flexibility, heat resistance, heat-aging resistance, moldability, etc., and, therefore, can exhibit properties suitable especially as materials of general extrusion-molded products such as sheets, films, profile-extrusion molded products and tubes. Further, the thus obtained molded products can also exhibit an excellent combustibility and a less environmental pollution.

The polyamide resin composition of the present invention is excellent in flame retardancy, flexibility, mechanical strength, heat resistance, etc., as well as moldability when used as various molding materials, and is especially suitably used as extrusion-molding materials.

In particular, the tubes produced from the polyamide resin composition of the present invention are excellent in flame retardancy, combustibility, environmental suitability and mechanical strength, and, therefore, are suitably used as not only ordinary tubes and industrial tubes, but also various heat-resisting tubes such as corrugated tubes and spiral tubes which can withstand a continuous use under a high temperature condition within engine room of automobiles, etc.

### Examples

The present invention is described in more detail below by reference to the following Examples and Comparative Examples. However, these Examples are only illustrative and not intended to limit the scope of the present invention thereto.

### Evaluation of properties

In the following Examples and Comparative Examples, various properties were measured and evaluated by the following methods.

### Melting point:

10 mg of a sample was heated at a temperature rise rate of 20°C/min to measure a melting peak temperature thereof using "DSC20" manufactured by Seiko Instruments Inc.
Viscosity number:
Measured according to ISO 307 (JIS K6933). Oxygen index:
Measured according to ISO 4589 (JIS K7201). Tensile modulus (evaluation of flexibility):

The tensile modulus of a test specimen (test specimen according to JIS K7162) which was allowed to stand at 23°C and 65% RH for not less than 48 hours was measured at an elastic stress rate of 5 mm/min according to ISO 5271 (JIS K7161).
Tensile elongation (evaluation of tenacity):
   Tensile elongation was measured according to ASTM-D638.
Preparation of test specimen for tensile test:
   A 1 mm-thick and 100 mm-square sheet was produced using an injection molding machine "IS80EPN" manufactured by Toshiba Machine Co., Ltd., at a cylinder temperature of 250°C and a mold temperature of 50°C for an injection time of 10 sec and a cooling time of 15 sec, and then the sheet was stamped out the JIS #No.3 test specimen in a flowing direction.

### Raw materials used:

In the following Examples and Comparative Examples, the following raw materials were used.
(1) Polyamide resin A: nylon 6 "NOVAMID (registered trademark) 1020J" produced by Mitsubishi Engineering-Plastics Corporation; viscosity number: 182.15; melting point: 224°C
(2) Polyamide resin B: nylon 6/66 as a copolyamide produced by the method described in Reference Example 1 (nylon 6 units: 75% by weight; nylon 66 units: 25% by weight); viscosity number: 182.15; melting point: 188°C
(3) Polyamide resin C: nylon 6/66 as a copolyamide produced by the method described in Reference Example 1 (nylon 6 units: 80% by weight; nylon 66 units: 20% by weight); viscosity number: 182.15; melting point: 193°C
(4) Polyamide resin D: nylon 6/69 as a copolyamide produced by the method described in Reference Example 2 (nylon 6 units: 50% by weight; nylon 69 units: 50% by weight); viscosity number: 182.5; melting point: 134°C
(5) Polyamide resin E: nylon 6 "NOVAMID (registered trademark) 1010J" produced by Mitsubishi Engineering-Plastics Corporation; viscosity number: 118; melting point: 224°C

### Reference Example 1:

A 200 L autoclave was charged with 60 kg of caprolactam and 200 mL of water, purged with a nitrogen gas and then closed. After heating the contents of the autoclave to 150°C, a 40% hexamethylene diammonium adipate aqueous solution previously prepared so as to have a predetermined composition was fed into the autoclave by a metering pump while maintaining an inside temperature and inside pressure of the autoclave at 150°C and 2.5 kg, respectively, under stirring. After completion of the feeding, the inside temperature of the autoclave was raised to 260°C while maintaining the inside pressure thereof at 10 kg. After completion of the temperature rise, the inside pressure of the autoclave was released, and the contents of the autoclave were reacted with each other under reduced pressure until reaching a desired stirring power. After introducing a nitrogen gas into the autoclave to retain the inside pressure at ordinary pressure, the stirring operation was stopped, and the contents thereof were withdrawn in the form of strands, and then formed into pellets. The thus obtained pellets were extracted with a boiled water to remove unreacted monomers therefrom, and then dried to obtain a copolyamide.

### Reference Example 2:

A 200 L autoclave was charged with 60 kg of caprolactam and 200 mL of water, purged with a nitrogen gas and then closed. After heating the contents of the autoclave to 150°C, a 40% hexamethylene diammonium azelate aqueous solution previously prepared so as to have a predetermined composition was fed into the autoclave by a metering pump while maintaining an inside temperature and inside pressure of the autoclave at 150°C and 2.5 kg, respectively, under stirring. After completion of the feeding, the inside temperature of the autoclave was raised to 260°C while maintaining the inside pressure thereof at 10 kg. After completion of the temperature rise, the inside pressure of the autoclave was released, and the contents of the autoclave were reacted with each other under reduced pressure until reaching a desired stirring power. After introducing a nitrogen gas into the autoclave to retain the inside pressure at ordinary pressure, the stirring operation was stopped, and the contents thereof were withdrawn in the form of strands, and then formed into pellets. The thus obtained pellets were extracted with a boiled water to remove unreacted monomers therefrom, and then dried to obtain a copolyamide.
(6) Triazine-based flame retardant: melamine cyanurate produced by Mitsubishi Chemical Corporation; tradename "MCA-CO"
(7) Hindered phenol-based compound A: N,N'-hexamethylenebis(3,5-di-t-butyl-4-hydroxy-hydrocinnamamide) produced by Ciba Specialty Chemicals, Inc.; tradename "IRGANOX 1098"
(8) Hindered phenol-based compound B: pentaerythrityl-tetrakis[3-(3,5-di-t-butyl-4-hydroxyphenyl)propionate] produced by Ciba Specialty Chemicals, Inc.; tradename "IRGANOX 1010"
(9) Phosphorus-based stabilizer A: bis(2,6-di-t-butyl-4-methylphenyl)pentaerythritol-diphosphite produced by Asahi Denka Co., Ltd.; tradename "PEP-36"
(10) Phosphorus-based stabilizer B: tetrakis(2,4-di-t-butylphenyl)-4,4'-biphenylene-diphosphite produced by Clariant Japan Co., Ltd.; tradename "PEP-Q"
(11) Phosphorus-based stabilizer C: tris(2,4-di-t-butylphenyl)phosphite produced by Asahi Denka Co., Ltd.; tradename "AS2112"
(12) Sulfur-based stabilizer: dilauryl-thio-dipropionate produced by API Corporation; tradename "DLTP"
(13) Copper-based stabilizer A: a mixture of copper iodide, potassium iodide and calcium stearate (copper iodide: 24.6% by weight; potassium iodide: 70.4% by weight; calcium stearate: 5% by weight) produced by Ciba Specialty Chemicals, Inc.; tradename "IRGANOX IXCB41710"

### Examples 1 to 3 and Comparative Examples 1 to 5:

The polyamide resins A to D and the flame retardant in amounts as shown in Table 1 were blended with 0.5 part by weight of the hindered phenol-based compound A, 0.3 part by weight of the phosphorus-based stabilizer A and 0.2 part by weight of the sulfur-based stabilizer, and the resultant mixture was melted and kneaded and further pelletized using a twin-screw extruder "TEX-30HCT" manufactured by Nippon Seikosho Co., Ltd., at a cylinder set temperature of 250°C. The thus obtained pellets were dried by a vacuum dryer at 120°C, thereby obtaining pellets of a polyamide resin composition.

The thus obtained polyamide resin composition pellets were molded into the tensile test specimen as specified in the above item (6) which was then subjected to a tensile test. Separately, the obtained pellets were extruded from a single-screw extruder having a cylinder diameter of 40 mm and an L/D ratio of 22:1 which was equipped at a tip end thereof with a circular die having a diameter of 15 mm, at a cylinder temperature of 250°C, introduced into a regulating ring having an inner diameter of 10 mm, and then drawn off while closely contacting with an inside of the ring and while simultaneously cooling, thereby obtaining a tube having a thickness of 0.8 mm. The thus obtained tube was tested to measure an oxygen index thereof in an absolute dry condition. The results are shown in Table 1.

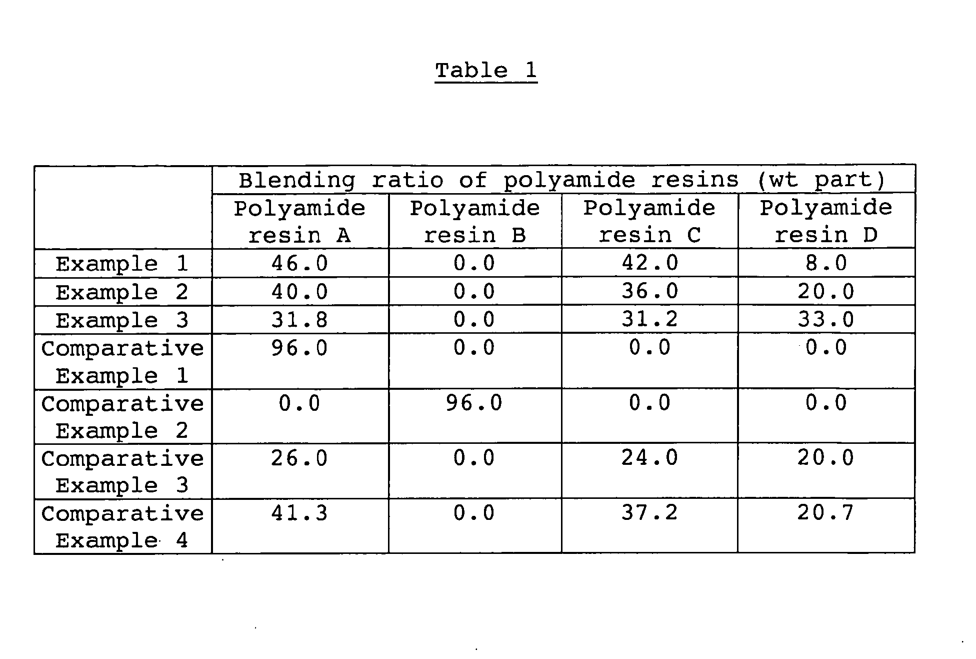

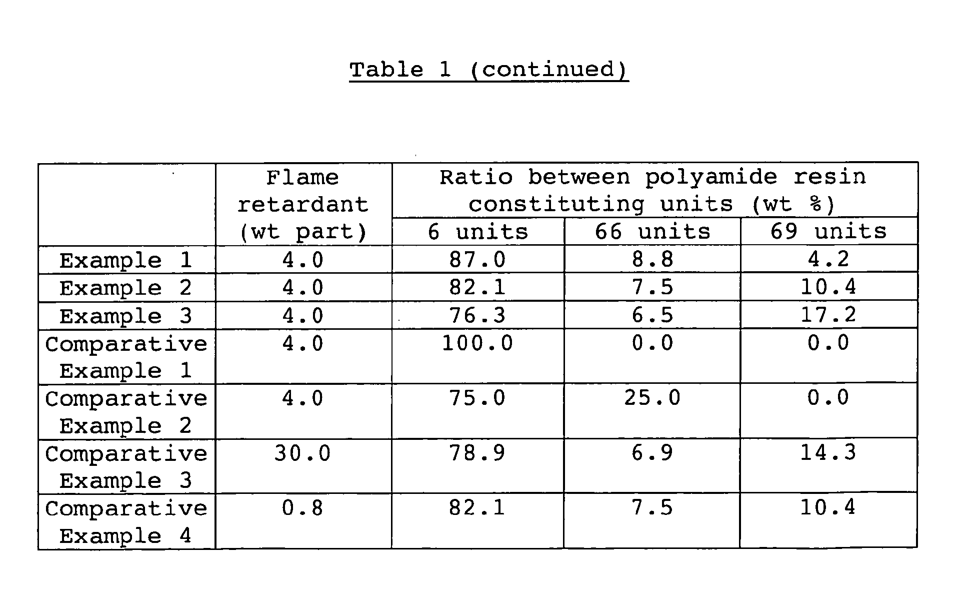

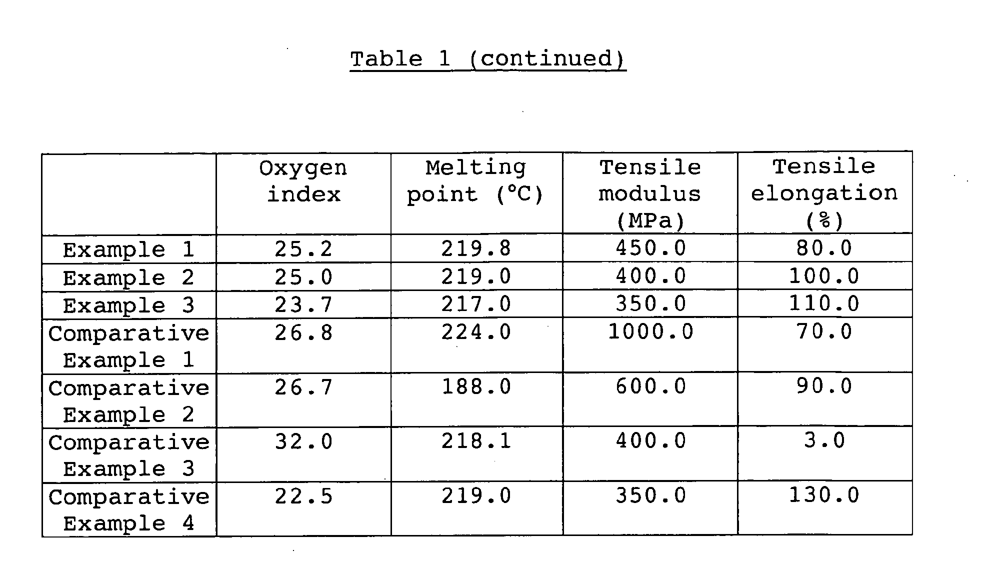

### Examples 4 to 9:

98 parts by weight of a polyamide resin mixture composed of 46.7 parts by weight of the polyamide resin E, 43.2 parts by weight of the polyamide resin C and 8.1 parts by weight of the polyamide resin D (weight ratio between constituting units: 6 units/66 units/69 units = 87.3/8.6/4.1) was blended with 2 parts by weight of the triazine-based flame retardant as well as various stabilizers in amounts as shown in Table 2, and the resultant mixture was melted, kneaded and then pelletized by the same method as defined in Example 1, thereby obtaining pellets of a polyamide resin composition. The thus obtained polyamide resin composition pellets were formed into the above tensile test specimen. The obtained test specimen in a dried state was subjected to a tensile test to measure initial properties thereof. Next, the tensile test specimen was subjected to heat treatment (heat-aging treatment) in a hot-air circulating type oven at 165°C for 168 hours. The thus heat-treated test specimen was stored for 48 hours in a chamber maintained at 23°C and 65% RH, and then subjected to measurements of a tensile strength and tensile elongation according to the same procedure as described above. The results are shown in Table 2. Further, it was confirmed that all of the tensile test specimens which were subjected to the same heat-aging treatment as described above, exhibited an oxygen index of 24.

**Table 2**

| | Hindered phenol-based compound A (wt part) | Hindered phenol-based compound B (wt part) |
|---|---|---|
| Example 4 | 0.5 | - |
| Example 5 | 0.5 | - |
| Example 6 | 0.5 | - |
| Example 7 | 0.25 | 0.25 |
| Example 8 | - | - |
| Example 9 | 0.5 | - |

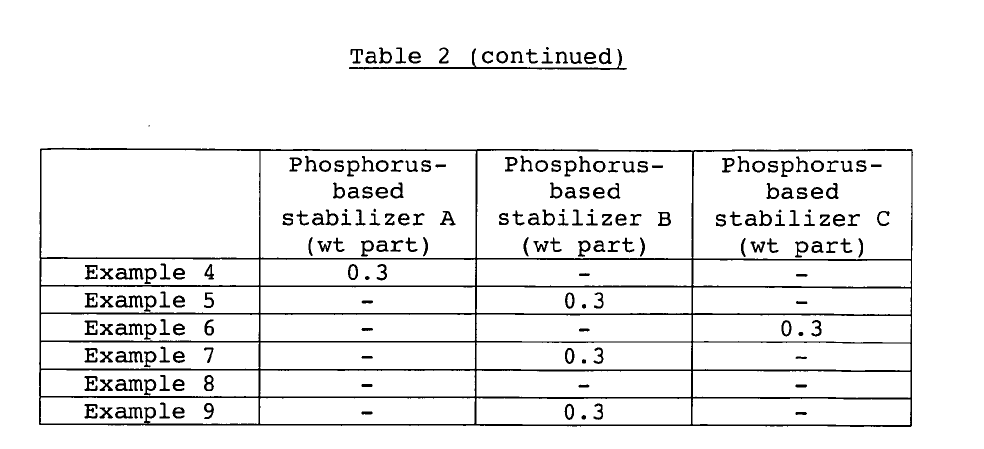

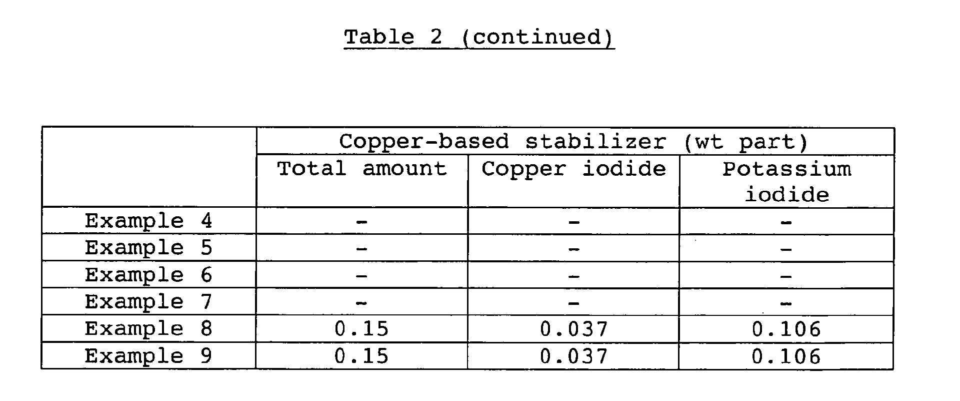

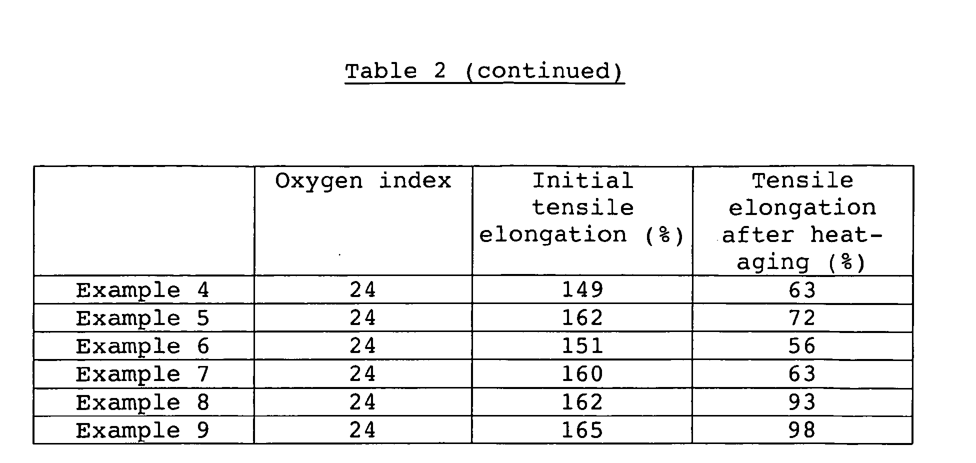

From Tables 1 and 2, the followings became apparent:
(1) The compositions obtained in Examples 1 to 3 using the polyamide resin composed of the three kinds of constituting units, were excellent in all of flame retardancy (oxygen index), heat resistance (melting point), flexibility (tensile modulus) and tenacity (tensile elongation), and further exhibited an excellent environmental suitability upon disposal since no halogen-based compounds were contained therein. On the other hand, the composition obtained in Comparative Example 1 using the polyamide resin composed of polyamide 6 units solely, was deteriorated in flexibility and slightly insufficient in tenacity, and the composition obtained in Comparative Example 2 using the polyamide resin composed of polyamide 66 units solely, was also insufficient in both melting point and flexibility. In addition, the composition obtained in Comparative Example 3 using the polyamide resin composed of the three kinds of constituting units but using a too large amount of the flame retardant, was considerably deteriorated in tenacity, and the composition obtained in Comparative Example 4 using a too small amount of the flame retardant, was insufficient in flame retardancy.
(2) From the results of the heat-aging test in Examples 4 to 7, it was confirmed that the composition obtained in Example 5 using the hindered phenol A in combination with the phosphorus-based stabilizer B, exhibited an excellent tensile elongation even after the heat-aging test as compared to the compositions obtained in Examples 4, 6 and 7 using the other hindered phenols and phosphorus-based stabilizers.
(3) Further, it was confirmed that the composition obtained in Example 8 using the copper compound exhibited a more excellent heat-aging resistance than those compositions obtained in Examples 4 to 7, and the composition obtained in Example 9 using the copper compound in combination with the hindered phenol and the phosphorus-based stabilizer exhibited a still more excellent heat-aging resistance.

## Claims

1. A polyamide resin composition comprising 99 to 80 parts by weight of a polyamide base resin comprising at least one polyamide resin and 1 to 20 parts by weight of a triazine-based flame retardant, the total amount of polyamide base resin and triazine-based flame retardant being 100 parts by weight,
said polyamide base resin having constituting units comprising (a) polyamide 6 constituting units comprising a polycondensate of ε-caprolactam and (b) two or more kinds of polyamide constituting units comprising a polycondensate of hexamethylenediamine and a dicarboxylic acid having a carbon number of 6 to 11.

2. A polyamide resin composition according to claim 1, wherein one of said two or more kinds of polyamide constituting units (b) comprising a polycondensate of hexamethylenediamine and a dicarboxylic acid having a carbon number of 6 to 11, are polyamide 66 constituting units comprising a polycondensate of hexamethylenediamine and adipic acid, and the other of said two or more kinds of polyamide constituting units (b) are polyamide constituting units comprising a polycondensate of hexamethylenediamine and a dicarboxylic acid having a carbon number of 7 to 11.

3. A polyamide resin composition according to claim 1, wherein said polyamide resin has 75 to 94% by weight of polyamide 6 constituting units comprising a polycondensate of ε-caprolactam; 3 to 9% by weight of polyamide 66 constituting units comprising a polycondensate of hexamethylenediamine and adipic acid; and 3 to 20% by weight of polyamide constituting units comprising a polycondensate of hexamethylenediamine and a dicarboxylic acid having a carbon number of 7 to 11.

4. A polyamide resin composition according to claim 2, wherein said dicarboxylic acid having a carbon number of 7 to 11 has carbon atoms in odd numbers.

5. A polyamide resin composition according to claim 1, wherein said two or more kinds of polyamide constituting units (b) comprising a polycondensate of hexamethylenediamine and a dicarboxylic acid having a carbon number of 6 to 11, comprise polyamide 66 constituting units comprising a polycondensate of hexamethylenediamine and adipic acid, and polyamide 69 constituting units comprising a polycondensate of hexamethylenediamine and azelaic acid.

6. A polyamide resin composition according to claim 1, wherein said composition has a melting point of 190 to 260°C.

7. A polyamide resin composition according to claim 1, further comprising a hindered phenol-based compound and a phosphorus-based stabilizer.

8. A polyamide resin composition according to claim 1, further comprising a chlorine- and bromine-free copper compound and a chlorine- and bromine-free alkali halide.

9. A polyamide resin composition according to claim 1, wherein said composition is produced by blending a polyamide having polyamide 6 constituting units comprising a polycondensate of ε-caprolactam with a polyamide having two or more kinds of polyamide constituting units comprising a polycondensate of hexamethylenediamine and a dicarboxylic acid having a carbon number of 6 to 11.

10. A polyamide resin composition according to claim 1, wherein said composition is produced by blending a copolyamide (polyamide 6/66) obtained by polycondensing ε-caprolactam, hexamethylenediamine and adipic acid with each other, with a polyamide having polyamide constituting units comprising a polycondensate of hexamethylenediamine and a dicarboxylic acid having a carbon number of 7 to 11.

11. A polyamide resin composition according to claim 10, wherein said composition is produced by blending a polyamide having polyamide 6 constituting units comprising a polycondensate of ε-caprolactam, a copolyamide (polyamide 6/66) obtained by polycondensing ε-caprolactam, hexamethylenediamine and adipic acid, and a polyamide having polyamide constituting units comprising a polycondensate of hexamethylenediamine and a dicarboxylic acid having a carbon number of 7 to 11, with each other.

12. A molded product produced by extrusion-molding said polyamide resin composition as defined in claim 1.

13. A molded product according to claim 12, wherein the molded product is a tube.

14. A molded product according to claim 12, wherein the molded product has an oxygen index of not less than 23 as measured according to ISO 4589 (JIS K7201).
